(19) Europäisches Patentamt
European Patent Office
Office européen des brevets

(11) EP 4 431 839 A1

(12) EUROPEAN PATENT APPLICATION
published in accordance with Art. 153(4) EPC

(43) Date of publication:
**18.09.2024 Bulletin 2024/38**

(21) Application number: **21963331.0**

(22) Date of filing: **08.11.2021**

(51) International Patent Classification (IPC):
***F25B 1/00*** *(2006.01)*

(52) Cooperative Patent Classification (CPC):
**F25B 1/00**

(86) International application number:
**PCT/JP2021/040982**

(87) International publication number:
**WO 2023/079738 (11.05.2023 Gazette 2023/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventors:
- **HIRATSUKA, Kengo**
**Tokyo 100-8310 (JP)**
- **NAKAMURA, Manami**
**Tokyo 100-8310 (JP)**
- **KOJIMA, Kenji**
**Tokyo 100-8310 (JP)**
- **TOYAMA, Satoru**
**Tokyo 100-8310 (JP)**

(74) Representative: **Meissner Bolte Partnerschaft mbB**
**Patentanwälte Rechtsanwälte**
**Postfach 86 06 24**
**81633 München (DE)**

# (54) REFRIGERATION CYCLE DEVICE

(57) A refrigeration cycle device including a refrigerant circuit (100) including a compressor (3), wherein a refrigerant is enclosed in refrigerant circuit (100), the refrigerant contains a hydrocarbon having 1 to 4 carbon atoms and a sulfur-based odorant, compressor (3) is filled with a refrigeration oil, the refrigeration oil contains polyalkylene glycol, and a ratio of a number of oxygen atoms to a number of carbon atoms in a molecular structure of polyalkylene glycol is 0.50 or less.

FIG.1

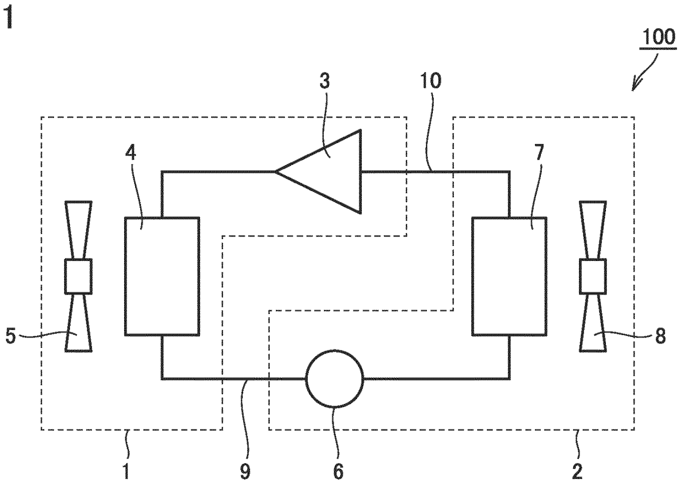




Processed by Luminess, 75001 PARIS (FR)

## Description

TECHNICAL FIELD

The present disclosure relates to a refrigeration cycle device.

BACKGROUND ART

The refrigerant used for a refrigeration cycle device is currently restricted by, for example, the Fluorocarbon Emissions Control Act (enacted on April 2015). Specifically, the upper limit is set on the Global Warming Potential (GWP) value of the refrigerant to be used. Thus, use of a refrigerant having a further low GWP is needed.
In recent years, for example, hydrocarbons having 1 to 4 carbon atoms such as R-290 (propane), R-1270 (propylene), R-600a (isobutane) are examined as the refrigerant having a low GWP value. The hydrocarbons having 1 to 4 carbon atoms have a further lower GWP value than saturated fluorinated hydrocarbon compounds (hydrofluorocarbons), which are refrigerants having a relatively low GWP value.
However, the hydrocarbons having 1 to 4 carbon atoms have higher flammability than hydrofluorocarbons. For example, in the international standard ISO-817, which defines safety classification for refrigerants, R-32 (difluoromethane), one of the hydrofluorocarbons, is registered as lower flammability (Class 2L), and on the other hand, R-290, R-1270, and R-600a are registered as higher flammability (Class 3).
For example, when a refrigerant having high flammability, such as a hydrocarbon having 1 to 4 carbon atoms, is used as the refrigerant for a refrigeration cycle device, it is preferable to take a measure of making the refrigerant recognizable by the sense of smell or the sense of vision. In addition, to suppress the dissolution of the refrigerant into a refrigeration oil and to reduce the amount of the refrigerant to be filled, it is preferred to use a refrigeration oil having a low solubility with the refrigerant.
As the measure of making the refrigerant recognizable by the sense of smell, for example, Patent Literature 1 (Japanese Patent Laying-Open No. 2020-112285) discloses a method including mixing a sulfur-based odorant such as mercaptan, sulfide, or thiophene with the refrigerant to detect the leakage of the refrigerant by an unpleasant odor. Patent Literature 1 also discloses that use of polyalkylene glycol as a refrigeration oil enables reduction in the amount of the refrigerant dissolved in the refrigeration oil, and can thus ensure necessary refrigeration cycle performance with a lower amount of the refrigerant to be filled.
Patent Literature 2 (Japanese Patent Laying-Open No. 2002-38135) discloses that tetrahydrothiophene (THT) is preferable as an odorant since it does not react with the material for the refrigerating circuit, has miscibility with the refrigerant, and has miscibility with refrigeration oil.

CITATION LIST

PATENT LITERATURE

PTL 1: Japanese Patent Laying-Open No. 2020-112285
PTL 2: Japanese Patent Laying-Open No. 2002-38135

SUMMARY OF INVENTION

TECHNICAL PROBLEM

However, the inventors have found the following: sulfur-based odorants such as THT have polarity due to the bias of charge in the molecule; thus, when a refrigeration oil having high polarity is used, the sulfur-based odorant is dissolved in the refrigeration oil in a compressor so that the amount of the sulfur-based odorant that circulates in the refrigerant circuit with the refrigerant is reduced; and when the refrigerant is released from the refrigeration cycle device, the refrigerant is hardly detectable by the sense of smell. In addition, since polyalkylene glycol contain a large amount of oxygen (O), which is an element having a large electronegativity in the molecular structure, they are refrigeration oils having high polarity and dissolve a large amount of sulfur-based odorants depending on the composition.
The present disclosure has been made in view of the above problems, and an object of the present disclosure is to provide a refrigeration cycle device that suppresses the dissolution of a sulfur-based odorant in polyalkylene glycol and makes the leakage of a refrigerant recognizable by the sense of smell.

SOLUTION TO PROBLEM

A refrigeration cycle device according to the present disclosure includes a refrigerant circuit including a compressor, wherein

a refrigerant is enclosed in the refrigerant circuit,
the refrigerant contains a hydrocarbon having 1 to 4 carbon atoms and a sulfur-based odorant,
the compressor is filled with a refrigeration oil,
the refrigeration oil contains polyalkylene glycol, and
a ratio of a number of oxygen atoms to a number of carbon atoms in a molecular structure of polyalkylene glycol is 0.50 or less.

ADVANTAGEOUS EFFECT OF INVENTION

According to the present disclosure, a refrigeration cycle device that suppresses the dissolution of the sulfur-based odorant in polyalkylene glycol and makes the leakage of the refrigerant recognizable by the sense of smell can be provided.

BRIEF DESCRIPTION OF DRAWINGS

Fig. 1 is a schematic configuration diagram showing one example of a refrigeration cycle device according to an embodiment 1.
Fig. 2 is a schematic cross-sectional view showing one example of a compressor of the refrigeration cycle device according to embodiment 1.
Fig. 3 is a graph showing a relationship between the concentration of tetrahydrothiophene in an enclosed refrigerant and the concentration of tetrahydrothiophene in collected refrigerant gas.
Fig. 4 is a graph showing a relationship between the concentration of tetrahydrothiophene in a sample gas and the odor index (equivalent value).

DESCRIPTION OF EMBODIMENTS

Hereinafter, the embodiments of the present disclosure will be described with reference to the drawings. In the drawings, the dimensional relationship of the length, width, thickness, depth, and the like is appropriately changed for the purpose of clarity and simplification of the drawing, and does not indicate the actual dimensional relationship.

Embodiment 1.

First, the outline of the refrigeration cycle device of the present embodiment is briefly described. Fig. 1 is a schematic configuration diagram showing one example of the refrigeration cycle device according to embodiment 1. An outdoor unit 1 includes a compressor 3, a condenser 4, an outdoor blower 5, and the others, and compressor 3 and condenser 4 are connected via piping. An indoor unit 2 includes an expansion valve 6, an evaporator 7, an indoor blower 8, and the others, and expansion valve 6 and evaporator 7 are connected via piping.
Compressor 3 of outdoor unit 1 and evaporator 7 of indoor unit 2 are connected via a gas pipe 10. Condenser 4 of outdoor unit 1 and expansion valve 6 of indoor unit 2 are connected via a liquid pipe 9.
A refrigerant circuit 100 is formed by such a refrigeration cycle device configuration, and a refrigerant is circulated in refrigerant circuit 100 via liquid pipe 9 and gas pipe 10.
Compressor 3 compresses the refrigerant that has turned into a gaseous state in gas pipe 10. Condenser 4 cools the gaseous refrigerant that has been compressed by compressor 3 to form a high-pressure liquid refrigerant or a gas-liquid two-phase refrigerant. Expansion valve 6 reduces the pressure of the high-pressure liquid refrigerant or the gas-liquid two-phase refrigerant. Evaporator 7 heats the refrigerant reduced in pressure to form a low-pressure gaseous refrigerant. Compressor 3 sucks and recompresses the refrigerant that has turned into a low-pressure gaseous state by evaporator 7.
Outdoor blower 5 is a constituent that sends air to condenser 4, and is provided to promote the absorption and release of heat by the heat exchange of the refrigerant flowing in condenser 4 with air. Indoor blower 8 is a constituent that sends air to evaporator 7, and is provided to promote the absorption and release of heat by the heat exchange of the refrigerant flowing in evaporator 7 with air.

In the present embodiment, the configuration for carrying out the heat exchange of condenser 4 and evaporator 7 with air is described, but the configuration is not limited to this configuration. For example, condenser 4 and evaporator 7 may be configured so as to exchange heat with not air but a liquid such as water.

In the present embodiment, the configuration in which evaporator 7 is provided in indoor unit 2 is described, but the configuration is not limited to this configuration. For example, condenser 4 may be arranged on the inside, and evaporator 7 may be arranged on the outside.

With respect to outdoor unit 1 as described above, for example, a four-way valve or a combination of a plurality of valves may be arranged, or a switching mechanism that switches an inlet pipe and a discharge pipe of compressor 3 may be provided. By providing a switching mechanism, the heat exchanger in outdoor unit 1 functions as evaporator 7 and the heat exchanger in indoor unit 2 functions as condenser 4, whereby heating of the indoor using the outdoor heat is enabled.

The refrigeration cycle device may be, for example, any of a device capable of carrying out both cooling and heating, a device capable of carrying out only cooling, or a device capable of carrying out only heating.

In the present embodiment, the configuration in which expansion valve 6 is provided in indoor unit 2 is described, but the configuration is not limited to this configuration. For example, expansion valve 6 may be arranged in outdoor unit 1. For example, expansion valve 6 may be provided on both outdoor unit 1 and indoor unit 2. Further, for example, a plurality of indoor units 2 or a plurality of outdoor units 1 may be provided in refrigerant circuit 100.

<Refrigerant>

Next, the refrigerant enclosed in the refrigerant circuit in the present embodiment will be described. The refrigerant contains a main component that functions as the refrigerant, and further contains a sulfur-based odorant for detecting the leakage of the refrigerant.

Herein, the aforementioned "main component" is the component whose proportion in the total amount of the refrigerant (including the sulfur-based odorant and the others) (content in the refrigerant) is more than 50% by mass. The content of the main component in the refrigerant is preferably 90% by mass or more, and more preferably 95% by mass or more.

The main component that functions as the refrigerant is a hydrocarbon having 1 to 4 carbon atoms. Examples of the hydrocarbon having 1 to 4 carbon atoms include R-290 (propane), R-1270 (propylene), and R-600a (isobutane). The hydrocarbon having 1 to 4 carbon atoms is preferably propane, propylene, or a mixture thereof. This is because they have an operating pressure suitable for use for the refrigeration cycle device. In view of oxidation stability, propane is more preferable. Propane has a GWP value significantly as low as 3 and also high cooling performance, and may thus contribute to the reduction in environmental load during the production and operation of the refrigeration cycle device.

(Sulfur-based odorant)

The sulfur-based odorant blended in the refrigerant is an odorant containing a sulfur element. Examples of the sulfur-based odorant include mercaptans, sulfides, and thiophenes. Examples of mercaptans include tertiary butyl mercaptan (TBM) and ethyl mercaptan (EM); examples of sulfides include dimethyl sulfide (DMS) and diethyl sulfide (DES); and examples of thiophenes include tetrahydrothiophene (THT). These sulfur-based odorants are compounds that have been used in fuel gas and have an unpleasant odor. One of these sulfur-based odorants may be used singly, or two or more thereof may be used in combination.

The sulfur-based odorant is preferably TBM, EM, DMS, THT, which are also used in fuel gas for households, or a mixture thereof. Mixing a sulfur-based odorant used in fuel gas for households in the refrigerant enables the leakage of the refrigerant to be easily detected by an unpleasant odor inherent in the sulfur-based odorant.

The sulfur-based odorant is more preferably THT. THT is chemically stable as compared with TBM, EM, DMS and the like, so that it hardly causes a decomposition reaction or a corrosion reaction in the refrigerant circuit, and THT also hardly causes solidification in the refrigerant circuit because of its melting point as low as -96°C.

The content of the sulfur-based odorant is preferably 50 ppm by weight or more and less than 1,100 ppm by weight. The reason for this is as follows: when the content of the sulfur-based odorant is within the above range, the leakage of the refrigerant from the refrigerant circuit can be easily detected and a not excessively unpleasant odor is obtained. The content of the sulfur-based odorant is more preferably 90 ppm by weight or more and less than 1026 ppm by weight, and further preferably 176 ppm by weight or more and less than 987 ppm by weight.

<Compressor>

In the present embodiment, the refrigeration cycle device includes a compressor. The refrigerant passes through the inside of the compressor. The compressor contains a refrigeration oil that contains polyalkylene glycol as a main

component.

Fig. 2 is a schematic cross-sectional view showing one example of the compressor of the refrigeration cycle device according to the present embodiment. Compressor 3 includes a shell 11, as shown in Fig. 2. Shell 11 includes a compression mechanism 12 in the inside thereof, and includes an electric motor 13 which drives compression mechanism 12. In addition, an inlet pipe 14 for allowing the refrigerant to be flowed into the inside and a discharge pipe 15 for allowing the refrigerant to be flowed to the outside are connected to shell 11. An accumulator 16 which separates gas and liquid in the refrigerant and sends steam into inlet pipe 14 is connected to the upstream side of inlet pipe 14.

The refrigerant that has passed through accumulator 16 flows from inlet pipe 14 into compression mechanism 12 in shell 11. The refrigerant that has flowed into compression mechanism 12 is compressed to have high temperature and high pressure, and is discharged from discharge pipe 15. That is, compression mechanism 12 is configured to compress the refrigerant that has flowed from inlet pipe 14 into shell 11 and discharge the refrigerant from discharge pipe 15.

Compression mechanism 12 is a rotary-type compression mechanism composed of a combination of a rolling piston 17 and a vane (not shown) and the like. The refrigerant is compressed by changing the volume of a space surrounded by the inner peripheral surface of a cylinder chamber 19 of a cylinder 18 and the outer peripheral surface of rolling piston 17 and the vane (not shown) by an eccentric rotary motion of rolling piston 17.

The compressed refrigerant is discharged from a discharge hole 21 of an upper bearing 20 to a muffler space 22, and then discharged from a discharge hole 24 of a discharge muffler 23 into shell 11. The discharged refrigerant passes through a gap in electric motor 13 (such as a gap between an electric motor rotor 25 and an electric motor stator 26 or a groove provided on the outer peripheral surface of the electric motor stator 26), and is then discharged from discharge pipe 15 to the downstream side of the refrigerant circuit 100.

Compressor 3 has a sliding part on the inside of compression mechanism 12. For lubrication of the sliding part, a refrigeration oil is stored in an oil reservoir part 27, which is located below compressor 3. The refrigeration oil stored in oil reservoir part 27 is supplied through an oil supply hole (not shown) provided in the shaft of a driving shaft 28 to the sliding part in the inside of compression mechanism 12 by pumping action. The refrigeration oil is brought into contact with the refrigerant in compressor 3.

<Refrigeration oil>

Next, the refrigeration oil that fills the inside of the compressor for lubrication in the present embodiment will be described. The main component which functions as the refrigeration oil is polyalkylene glycol (PAG).

Herein, the aforementioned "main component" is the component whose proportion in the total amount of the refrigeration oil is more than 50% by mass. The content of the main component in the refrigeration oil is preferably 80% by mass or more, and more preferably 90% by mass or more.

PAG is a polymer of at least one selected from the group consisting of an ethylene oxide group (EO group) and a propylene oxide group (PO group) and is represented by the following chemical formula.

[Formula 1]

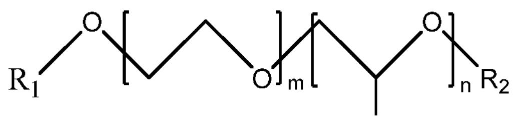

In the above chemical formula 1, m and n are each an integer of 0 or more and represent the number of EO groups and PO groups, and $R_1$ and $R_2$ are a hydrogen atom (H) or a hydrocarbon chain having one or more carbon atoms (C). The arrangement of EO groups and PO groups may be any of a random copolymer, an alternating copolymer, and a block copolymer.

In the above chemical formula 1, m and n preferably satisfy the relationships of the following formulas (1) and (2).When the relationships of the following formulas (1) and (2) are not satisfied, PAG may be solidified at low temperatures. $R_1$ and $R_2$ are preferably a hydrocarbon chain having one or more carbon atoms (C). When $R_1$ and $R_2$ are a hydrogen atom (H), the hygroscopicity of PAG increases, and the moisture may be mixed.

$$m + n \leq 100 \text{ ... formula (1)}$$

$$n/m + n \geq 0.20 \text{ ... formula (2)}$$

(Ratio of number of oxygen atoms to number of carbon atoms in molecular structure of PAG)

The ratio of the number of oxygen atoms (O) to the number of carbon atoms (C) in the molecular structure of PAG (O/C ratio) (hereinafter, also simply referred to as the "O/C ratio") is 0.50 or less. When the O/C ratio is 0.50 or less, the amount of the sulfur-based odorant dissolved in PAG is small, and the refrigerant released from the refrigerant circuit is recognizable by the sense of smell. The O/C ratio is preferably 0.43 or less, and more preferably 0.39 or less. The lower limit of the O/C ratio is not particularly limited, and the O/C ratio may be 0.25 or more, or may be 0.30 or more.
Other refrigeration oils may be mixed in the refrigeration oil, as long as the O/C ratio in the molecular structure of PAG is lower than that of PAG. Examples of other refrigeration oils include polyol ester, polyvinyl ether, alkylbenzene, alkylnaphthalene, mineral oil, poly α-olefin, or a mixture thereof. Since polyol ester and polyvinyl ether have low miscibility with a hydrocarbon having 1 to 4 carbon atoms like PAG, the amount of the refrigerant to be dissolved therein is small so that the amount of the refrigerant to be filled can be reduced. Accordingly, polyol ester and polyvinyl ether are preferable.
The refrigeration oil may contain an antioxidant, an acid scavenger, or an extreme-pressure agent (anti-wear agent) as a lubricant additive.
Examples of the antioxidant include phenol-based antioxidants such as 2,6-di-tert-butyl-4-methyl phenol, 2,6-di-tert-butyl-4-ethylphenol, and 2,2'-methylenebis(4-methyl-6-tert-butylphenol), and amine-based antioxidants such as phenyl-α-naphthylamine and N,N'-di-phenyl-p-phenylenediamine.
Examples of the acid scavenger include epoxy compounds such as phenyl glycidyl ether, alkyl glycidyl ester, alkyl glycidyl ether, alkylene glycol glycidyl ether, cyclohexene oxide, α-olefin oxide, and epoxidized soybean oil. The acid scavenger is preferably alkyl glycidyl ester, alkyl glycidyl ether, or α-olefin oxide.
Examples of the extreme-pressure agent (anti-wear agent) include phosphorus-based extreme-pressure agents such as phosphate esters, thiophosphate esters, acid phosphate esters, phosphite esters, acid phosphite esters and amine salts thereof. The extreme-pressure agent (anti-wear agent) is preferably a phosphate ester, a thiophosphate ester, or a mixture thereof. Specifically, tricresyl phosphate ($O=P-(OC_7H_7)_3$), triphenyl phosphorothioate ($S=P-(OC_6H_5)_3$), triphenyl phosphate ($O=P-(OC_6H_5)_3$), derivatives thereof, or a mixture thereof is preferable.
The refrigeration oil may contain an oxygen scavenger. Examples of the oxygen scavenger include sulfur-containing aromatic compounds such as 4,4'-thiobis(3-methyl-6-tert-butylphenol), diphenyl sulfide, dioctyl diphenyl sulfide, dialkyl diphenylene sulfide, benzothiophene, dibenzothiophene, phenothiazine, benzothiapyran, thiapyran, thianthrene, dibenzothiapyran, and diphenylene disulfide; aliphatic unsaturated compounds such as various olefins, diene, and triene; and cyclic terpenes having an unsaturated bond, such as α-pinene, β-pinene, limonene, and phellandrene. The oxygen scavenger is preferably an aliphatic unsaturated compound or a cyclic terpene having an unsaturated bond.
Also, the refrigeration oil may contain a fluorescent agent, a colorant, or the like so as to visually detect the refrigerant and the refrigeration oil.
However, if moisture is contained in the refrigeration oil, the deterioration of the refrigerant, refrigeration oil, and materials in the compressor may be promoted, and thus, it is necessary to control the amount of the moisture contained in the refrigeration oil to be filled so as to be 100 ppm by weight or less.
The refrigeration cycle device has been described above with reference to a mode in which a rotary compressor is used as compressor 3, but the refrigeration cycle device is not limited thereto. For example, a low-pressure shell or high-pressure shell scroll compressor, a screw compressor, or the others may be used as compressor 3.

<HSP distance>

The difference between the HSP distance between PAG and the sulfur-based odorant and the HSP distance between PAG and the refrigerant is -2.0 or more. Hereinafter, the HSP distance between PAG and the sulfur-based odorant is sometimes referred to as "the HSP distance to the sulfur-based odorant", and the HSP distance between PAG and the refrigerant is sometimes referred to as "the HSP distance to the refrigerant".
Herein, "HSP" means "Hansen Solubility Parameter", and is a value used to predict the solubility of substances based on the idea that "substances having similar intramolecular interactions are easily dissolved in each other". Specifically, HSP is represented as a three-dimensional vector by three parameters (dD, dP, and dH), which are a dispersion term, a polar term, and a hydrogen bond term, respectively. As for two substances, the solubility is higher, as their vectors (dD, dP, and dH) are similar.
The HSP of a substance can be cited from the database and calculated from the molecular structure by using computer software, HSPiP (Hansen Solubility Parameter in Practice). When HSPiP is not used, the calculation method for HSP is described in literatures (e.g., Van Krevelen, Properties of Polymers, 4th Edition, 2009).
The "HSP distance" is the distance between HSP values of two substances, and is a value indicating the similarity of vectors ((dD1, dP1, and dH1) and (dD2, dP2, and dH2)) of two substances. Specifically, it is determined by the following formula (3) based on the above three parameters (dD, dP, and dH). With respect to two substances whose HSP distances are to be calculated, dD, dP, and dH of one substance are represented by dD1, dP1, and dH1, and dD,

dP, and dH of another substance are represented by dD2, dP2, and dH2, in the following formula (3). As for two substances, the solubility is lower, as the HSP distance is larger.

$$\text{HSP distance} = \{4 \times (dD1\text{-}dD2)^2 + (dP1\text{-}dP2)^2 + (dH1\text{-}dH2)^2\}^{0.5} \ldots \text{formula (3)}$$

As the amount of the sulfur-based odorant dissolved in PAG is smaller, the amount of the sulfur-based odorant that circulates in the refrigerant circuit is larger, and the refrigerant released from the refrigerant circuit is recognizable by the sense of smell. In addition, as the amount of the refrigerant excluding the sulfur-based odorant dissolved in PAG is larger, the amount of the sulfur-based odorant dissolved in PAG is smaller due to the influence of the refrigerant excluding the sulfur-based odorant dissolved in PAG for the reason described below, and as a result, the amount of the sulfur-based odorant that circulates in the refrigerant circuit is larger, so that the refrigerant released from the refrigerant circuit is recognizable by the sense of smell. Namely, as the difference between the HSP distance to the sulfur-based odorant and the HSP distance to the refrigerant (the HSP distance to the sulfur-based odorant - the HSP distance to the refrigerant) is larger, the amount of the sulfur-based odorant dissolved in PAG is smaller, a larger amount of the sulfur-based odorant is contained in the refrigerant released from the refrigerant circuit, and the refrigerant released from the refrigerant circuit is recognizable by the sense of smell.

When the difference between the HSP distance to the sulfur-based odorant and the HSP distance to the refrigerant is -2.0 or more, the amount of the sulfur-based odorant dissolved in PAG is sufficiently small, and the refrigerant released from the refrigerant circuit is recognizable by the sense of smell. The difference between the HSP distance to the sulfur-based odorant and the HSP distance to the refrigerant is preferably -0.5 or more, and more preferably 0 or more. The upper limit of the difference between the HSP distance to the sulfur-based odorant and the HSP distance to the refrigerant is not particularly limited, and the difference may be 5.0 or less, or 3.0 or less.

EXAMPLES

Hereinafter, the present disclosure will be described in detail with reference to Examples, but the present disclosure is not limited to these Examples.

<Evaluation test 1>

Refrigerant gas in which a refrigerant, a sulfur-based odorant, and PAG were mixed was prepared under the conditions shown in Table 1 to evaluate the amount of the sulfur-based odorant released with the refrigerant when the refrigerant, the sulfur-based odorant, and PAG were mixed. In PAG used, m = 7, n = 36, and $R_1$ and $R_2$ were $CH_3$. The concentration of the sulfur-based odorant (THT) in the refrigerant gas is shown in Table 2.

[Table 1]

| | |
|---|---|
| Test container | Portable reactor (TVS-N2-50 manufactured by Taiatsu Techno Corporation) |
| Container capacity | $50cm^3$ |
| Refrigerant | R-290 (ECO FREEZE 290 manufactured by IWATANI INDUSTRIAL GASES CORPORATION) |
| Mass of refrigerant | 10.0g |
| Sulfur-based odorant | THT (T0114 manufactured by Tokyo Chemical Industry Co., Ltd.) |
| Mass of PAG | 10.0g |
| Amount of moisture in PAG | 100 ppm by weight or less based on the total amount of the refrigeration oil |

[Table 2]

| Test No. | THT Concentration in refrigerant gas (ppm by weight) |
|---|---|
| 1-1 | 2.3 |
| 1-2 | 24 |
| 1-3 | 180 |

(continued)

| Test No. | THT Concentration in refrigerant gas (ppm by weight) |
|---|---|
| 1-4 | 190 |
| 1-5 | 600 |
| 1-6 | 987 |
| 1-7 | 1740 |
| 1-8 | 2230 |

The above refrigerant gas was enclosed in a test container, which was shaken at 140°C to stir the refrigerant gas, and then, the test container was allowed to stand still at 25°C. 24 hours after the start of still standing, a tedlar bag (1-2711-05 manufactured by AS ONE Corporation) was connected to the discharge port of the test container, and the refrigerant gas was collected at 25°C. For the collected refrigerant gas, the concentration of THT was measured by using a gas chromatography mass spectrometer (JMS-K9 manufactured by JEOL Ltd.).

The relationship between the concentration of THT in the enclosed refrigerant gas and the concentration of THT in the collected refrigerant gas is shown in Fig. 3. The concentration of THT in the collected refrigerant gas was increased in a linear relation in a range of the concentration of THT in the enclosed refrigerant gas from 2.3 ppm by weight to 987 ppm by weight, and increased in a linear relation with a larger inclination in a range from 987 ppm by weight to 2,230 ppm by weight. The expression of the approximate line in Fig. 3 was $y = 0.047x$ in the range of the concentration of THT from 2.3 ppm by weight to 987 ppm by weight, and $y = 1.66x - 774$ in the range from 987 ppm by weight to 2,230 ppm by weight. Specifically, in the range of the concentration of THT in the enclosed refrigerant gas from 2.3 ppm by weight to 987 ppm by weight, the amount of THT released with R-290 was about 4.7% of the enclosed THT, and the remaining, about 95.3%, kept in a state dissolved in PAG and was not released as the gas.

Even when THT was mixed in R-290 as described above, THT was dissolved in PAG, so that only a part of THT in the enclosed refrigerant gas was released with R-290, and the refrigerant was demonstrated to be hardly detectable by the sense of smell when the refrigerant was released from the refrigeration cycle device.

<Evaluation test 2>

Each sample gas in which air was mixed with a sulfur-based odorant (THT) was prepared under the conditions shown in Table 3 to quantitatively evaluate the relationship between the concentration of the sulfur-based odorant in air and the intensity of the odor. The concentration of THT in the sample gas is shown in Table 4.

[Table 3]

| | |
|---|---|
| Sampling container | Smart Bag PA (AA-5 manufactured by GL Sciences Inc.) |
| Air used | High purity air (ZERO-A manufactured by Sumitomo Seika Chemicals Company, Limited.) |
| Air volume | $3000cm^3$ |
| THT used | THT (T0114 manufactured by Tokyo Chemical Industry Co., Ltd.) |
| Evaluation device | Fragrance analyzer (FF-2020S system manufactured by SHIMADZU CORPORATION) |

[Table 4]

| Sample No. | THT Concentration in sample gas (ppb by volume) |
|---|---|
| 2-1 | 3.0 |
| 2-2 | 10 |
| 2-3 | 100 |
| 2-4 | 300 |
| 2-5 | 1000 |
| 2-6 | 3000 |

The odor index (equivalent value) of the above sample gas was measured. Herein, the "odor index" is a numerical expression for the degree of odor using the human sense of smell, and is a value obtained by multiplying the common logarithm of the odor concentration of an odor component (the concentration of the odor component when the odor is diluted with air to the extent that the odor can no longer be sensed by the human sense of smell) by 10. The "odor index (equivalent value)" is a numerical value corresponding to the odor index and obtained by the measurement with an odor identification device. In the measurement, nitrogen ($N_2$) was used as the carrier gas, and the dilution factor of the sample with the carrier gas was set to 100.

The relationship between the concentration of THT in the sample gas and the odor index (equivalent value) is shown in Fig. 4. The concentration of THT in the sample gas and the odor index (equivalent value) were in a logarithmic function relationship. This means that the results following the rule of Weber-Fechner, which represents the relationship between the concentration of an odor substance and the intensity of the odor, were obtained. In the present test, high purity air was used as the gas for diluting THT. However, also in the case where THT is diluted with R-290, the same correlation is considered to be obtained for the concentration of THT and the odor index (equivalent value) because R-290 is odorless.

The odor index has a relationship with the odor intensity in the 6-step odor intensity display method as shown in Table 5. The concentrations of THT shown in Table 5 were the results of the determination of the concentration of THT corresponding to an odor intensity of 2.5 to 3.5, based on the relationship between the concentration of THT and the odor index (equivalent value) in Fig. 4.

[Table 5]

| Odor intensity | Detail | Odor index | THT Concentration (ppb by volume) |
|---|---|---|---|
| 0 | Odorless | 0 to less than 10 | less than 2.1 |
| 1 | An odor is sensed with difficulty | | |
| 2 | A weak odor whose odor source can be seen | 10 to 15 | 2.1 to 10 |
| 3 | An odor is sensed with ease | 12 to 18 | 4.1 to 29 |
| 4 | Strong odor | 14 to less than 21 | 7.8 to less than 77 |
| 5 | Intense odor | 21 or more | 77 or more |

To recognize the refrigerant by the sense of smell, the presence of the sulfur-based odorant contained in the refrigerant is needed to be recognized. Accordingly, the odor intensity of the refrigerant is preferably 2 (a weak odor whose odor source can be seen) or more, and more preferably 3 (an odor is sensed with ease) or more.

The refrigerant released from the refrigerant circuit into the atmosphere is diluted with air, and the concentration of THT is reduced. The international standard ISO-13734 relating to the odorization treatment of natural gas states that the natural gas is needed to have an odor even when being diluted to 20% by volume of the lower flammability limit (LFL). The LFL of R-290 is 21,000 ppm by volume in ISO-817, and 20% of the LFL is thus 4,200 ppm by volume.

As for the odorization treatment of gas, the Japanese ordinance on the odorization treatment of gas (an ordinance that establishes technical standards of gas facilities (Ordinance of the Ministry of International Trade and Industry No. 111 of 2000)) states that it is necessary to enable "the presence or absence of an odor to be sensed when the mixed volume ratio of gas to the air is 1/1,000". Accordingly, when the concentration of R-290 is diluted to 1,000 ppm by volume in the air, R-290 needs to be recognized by the odor, and thus, a stronger odorization treatment than ISO-13734 is required.

In mixed gas of the air and THT in which 1,000 ppm of R-290 is contained, THT needs to be contained in a concentration of 2.1 ppb by volume or more in order to make the odor intensity of the mixed gas 2 or more. That is, in the mixed gas of R-290 and THT, 2.1 ppm by volume (4.2 ppm by weight) or more of THT is needed to be contained.

To make the odor intensity of the mixed gas to 3 or more, THT needs to be contained in a concentration of 4.1 ppb by volume or more. That is, in the mixed gas of R-290 and THT, 4.1 ppm by volume (8.2 ppm by weight) or more of THT needs to be contained.

As described above, the concentration of THT needed to recognize the refrigerant by the sense of smell was demonstrated by quantitatively clarifying the relationship between the concentration of THT in the sample gas and the intensity of the odor.

In the results of evaluation test 1 shown in Fig. 3, the concentrations of THT to make the THT concentrations in the released refrigerant gas 4.2 ppm by weight and 8.2 ppm by weight are 90 ppm by weight and 176 ppm by weight, respectively. Thus, when PAG used in evaluation test 1 is used in the refrigeration cycle device, the refrigerant gas

released from the refrigerant circuit diluted to 1/1,000 in the air is recognizable by the sense of smell, as long as the concentration of THT in the refrigerant is 90 ppm by weight or more.

Meanwhile, when the odor intensity of the air containing the refrigerant gas is 5 (intense odor), the released odor of the refrigerant gas is too unpleasant. In the results of evaluation test 1 shown in Fig. 3, the concentration of THT to make the concentration of THT in the released refrigerant 77 ppm by volume (154 ppm by weight) is 514 ppm by volume (1,026 ppm by weight). In other words, when PAG shown in Table 2 is used in the refrigeration cycle device, the refrigerant gas released from the refrigerant circuit diluted to 1/1,000 in the air does not become a too unpleasant odor, as long as the THT concentration in the refrigerant is less than 1,026 ppm by weight.

<Evaluation test 3>

To demonstrate the influence on the results of evaluation test 1 by the molecular structure of PAG, each refrigerant gas in which R-290 containing the sulfur-based odorant (THT) serving as the refrigerant was mixed with PAG shown in Table 6 was prepared under the conditions shown in Table 7. The concentration of THT in the refrigerant was 600 ppm by weight so that the odor intensity of the refrigerant described in Table 5 was 3.

[Table 6]

| Test No. | m | n | R1 | R2 | O/C Ratio |
|---|---|---|---|---|---|
| 1 | 5 | 0 | H | H | 0.60 |
| 2 | 9 | 0 | $CH_3$ | H | 0.53 |
| 3 | 10 | 6 | $CH_3$ | $CH_3$ | 0.43 |
| 4 | 11 | 8 | H | H | 0.43 |
| 5 | 11 | 8 | $CH_3$ | H | 0.43 |
| 6 | 11 | 8 | $CH_3$ | $CH_3$ | 0.42 |
| 7 | 8 | 13 | $CH_3$ | H | 0.39 |
| 8 | 8 | 13 | $CH_3$ | $CH_3$ | 0.39 |
| 9 | 2 | 17 | H | H | 0.36 |
| 10 | 7 | 36 | $CH_3$ | $CH_3$ | 0.35 |
| 11 | 8 | 42 | $CH_3$ | $CH_3$ | 0.35 |
| 12 | 0 | 17 | H | H | 0.35 |
| 13 | 0 | 16 | $CH_3CH_2$ $CH_2CH_2$ | H | 0.33 |

[Table 7]

| | |
|---|---|
| Test container | Portable reactor (TVS-N2-50 manufactured by Taiatsu Techno Corporation) |
| Container capacity | $50cm^3$ |
| Refrigerant | R-290 (ECO FREEZE 290 manufactured by IWATANI INDUSTRIAL GASES CORPORATION) |
| Mass of refrigerant | 10.0g |
| Sulfur-based odorant | THT (T0114 manufactured by Tokyo Chemical Industry Co., Ltd.) |
| Sulfur-based odorant mass | 6.0mg (600 ppm by weight based on the total amount of R-290 and THT) |
| Mass of PAG | 10.0g |
| Amount of moisture in PAG | 100 ppm by weight or less based on the total amount of the refrigeration oil |

The values for the molecular structure of PAG shown in Table 6 were determined based on the number average degree of polymerization of the composition of each PAG. The O/C ratio is a value representing the ratio of the number of oxygen atoms (O) to the number of carbon atoms (C) in the molecular structure by two significant figures.

The above refrigerant gas was enclosed in a test container, which was shaken at 140°C to stir the refrigerant gas, and then, the test container was allowed to stand still at 25°C. 24 hours after the start of still standing, a tedlar bag (1-2711-05 manufactured by AS ONE Corporation) was connected to the discharge port of the test container, and the refrigerant gas was collected at 25°C. The collected refrigerant gas was diluted to 1/1,000 with high purity air (ZERO-A manufactured by Sumitomo Seika Chemicals Company, Limited.), and then, the evaluation of the odor intensity was carried out by the odor sensory test method with reference to the literature (Journal of Japan Society of Air Pollution, Vol. 27, No. 2, P. A17-A24, 1992). The results of the odor intensity of the collected refrigerant gas represented by the 6-level odor intensity display method are shown in Table 8. The evaluation was such that the odor intensity of 2 or more was rated as "A", and the odor intensity of 2 or more was rated as "B". The evaluation was carried out by 5 examiners.

[Table 8]

| Test No. | O/C Ratio | Odor intensity | Evaluation |
|---|---|---|---|
| 1 | 0.58 | 0 to 1 | B |
| 2 | 0.53 | 0 to 1 | B |
| 3 | 0.43 | 2 to 3 | A |
| 4 | 0.43 | 2 to 3 | A |
| 5 | 0.43 | 3 to 4 | A |
| 6 | 0.42 | 3 to 4 | A |
| 7 | 0.39 | 3 to 4 | A |
| 8 | 0.39 | 3 to 4 | A |
| 9 | 0.36 | 3 to 4 | A |
| 10 | 0.35 | 3 to 4 | A |
| 11 | 0.35 | 3 to 4 | A |
| 12 | 0.35 | 2 to 3 | A |
| 13 | 0.33 | 3 to 4 | A |

As a result of the above evaluation, the refrigerant gas in which PAG (Test No. 3 to 13) having an O/C ratio of 0.43 or less was mixed had an odor in the range of the odor intensity of 2 (a weak odor whose odor source can be seen) to the odor intensity of 4 (strong odor), and THT was demonstrated to be contained in the refrigerant gas. The refrigerant gas in which PAG (Test No. 1 and 2) having an O/C ratio of 0.53 or more was mixed had an odor in the range of the odor intensity of 0 (odorless) to the odor intensity of 1 (an odor is sensed with difficulty), and THT was not demonstrated to be contained in the refrigerant gas.

These results mean that the amount of THT that is dissolved in PAG and not released with the refrigerant gas can be explained by the ratio of the polar groups (C-O-C and C-O-H) in the molecular structure of PAG.

THT is a polar molecule having a dipole moment due to bias of charge, in a molecule. According to the literature (J. Am. Chem. Soc., Vol. 61, P. 1769-1780, 1939), the magnitude of the dipole moment of THT is 1.87 D. Since the dipole moments of $H_2O$ and $CH_3OH$, which are considered as polar solvents, are 1.9 D and 1.7 D, respectively, it can be seen that THT is a polar molecule having a large dipole moment.

Since THT is a polar molecule, THT is incorporated into the molecular chain of PAG by an electrical interaction with polar groups (C-O-C and C-O-H) of PAG and dissolved therein. Since PAG having a large O/C ratio has a large number of polar groups in the molecular structure, a strong electrical interaction of incorporating THT occurs. Consequently, when PAG having a large O/C ratio is mixed with THT, THT is hardly released.

Since R-290 does not have a polar group in the molecule, it is a nonpolar molecule having a significantly small bias of charge. According to the literature (J. Chem. Phys., Vol. 33, No. 5, P. 1514-1518, 1960), the dipole moment of R-290 is 0.083 D, which is smaller, and it can thus be seen that R-290 is a nonpolar molecule. Thus, the solubility of THT in R-290 is low, and when R-290 is dissolved in PAG, the solubility of THT in PAG is reduced. Since PAG having a large O/C ratio has a larger number of polar groups in the molecular structure, the solubility of R-290, which is a nonpolar molecule, is lower. Since PAG having a low O/C ratio has higher solubility of R-290, a larger amount of R-290

is dissolved in PAG. Accordingly, that the solubility of THT in PAG is lower and THT is more easily released. It is considered that, when the O/C ratio is 0.50 or less, the proportion of the polarized group of atoms in the molecular structure of PAG becomes half or less and that the effect of increasing the amount of THT released is achieved. Thus, the O/C ratio is preferably 0.50 or less.

From the above results, to circulate THT with R-290 in the refrigerant circuit by suppressing the dissolution of THT in PAG, PAG having an O/C ratio of 0.43 or less is preferably used.

From the results shown in evaluation test 1, the relationship of the O/C ratio and the odor intensity is considered to be obtained also when a hydrocarbon having 1 to 4 carbon atoms other than R-290, a sulfur-based odorant other than THT, and a refrigeration oil other than PAG are used. The reason for this is as follows: hydrocarbons having 1 to 4 carbon atoms other than R-290 are nonpolar molecules having a significantly small bias of charge in the molecule like R-290, and sulfur-based odorants other than THT are polar molecules like THT. According to the literature (J. Chem. Phys., Vol. 1, P. 337-340, 1933), it is reported that the dipole moments of mercaptans are about 1.3 D to 1.5 D, and that the dipole moments of sulfides are about 1.4 D to 1.58 D. Thus, they are polar molecules unlike hydrocarbons having 1 to 4 carbon atoms.

<Evaluation test 4>

The results of evaluation test 3 demonstrated that use of PAG having a low O/C ratio enabled reduction in the solubility of THT in PAG and release of THT with R-290. However, the difference in the odor intensities of the refrigerants of Test No. 3 to 13 in PAG cannot be explained. Thus, the correlation between the molecular structure of PAG and the amount of THT released was examined by using HSP. Each HSP of THT, R-290, and PAG of each Test No. is shown in Table 9. For HSP, HSPiP Ver. 5.3, which is computer software, was used, and PAG of each Test No. was calculated by the Van Krevelen method.

[Table 9]

| Substance name | | O/C Ratio | dD | dP | dH | HSP distance to THT | HSP distance to R-290 |
|---|---|---|---|---|---|---|---|
| THT | | - | 18.6 | 6.7 | 6.0 | - | 14.2 |
| R-290 | | - | 13.1 | 0.0 | 0.0 | 14.2 | - |
| PAG | 1 | 0.58 | 16.6 | 5.0 | 15.7 | 10.6 | 17.9 |
| | 2 | 0.53 | 16.7 | 3.4 | 11.1 | 7.2 | 13.7 |
| | 3 | 0.43 | 15.0 | 2.0 | 7.8 | 8.8 | 8.9 |
| | 4 | 0.43 | 14.8 | 1.9 | 9.9 | 9.8 | 10.6 |
| | 5 | 0.43 | 14.9 | 1.8 | 8.9 | 9.3 | 9.8 |
| | 6 | 0.42 | 15.0 | 1.8 | 7.8 | 8.9 | 8.9 |
| | 7 | 0.39 | 15.0 | 1.7 | 8.5 | 9.1 | 9.5 |
| | 8 | 0.39 | 15.0 | 1.6 | 7.6 | 9.0 | 8.6 |
| | 9 | 0.36 | 15.3 | 1.7 | 9.4 | 9.0 | 10.5 |
| | 10 | 0.35 | 14.7 | 1.1 | 7.3 | 9.7 | 8.0 |
| | 11 | 0.35 | 15.0 | 1.0 | 7.3 | 9.3 | 8.3 |
| | 12 | 0.35 | 15.1 | 1.7 | 9.4 | 9.2 | 10.4 |
| | 13 | 0.33 | 15.1 | 1.7 | 8.2 | 8.9 | 9.3 |

The HSP distance between R-290 and THT is a larger value than the HSP distance between PAG and THT, and the solubility of THT in R-290 is lower than the solubility of THT in PAG. Accordingly, when R-290 is dissolved in PAG, the amount of THT dissolved in PAG is considered to be reduced.

As the HSP distance between PAG and THT is larger, the solubility of THT in PAG is lower. As the HSP distance between PAG and R-290 is smaller, the solubility of R-290 in PAG is larger. Thus, a larger amount of R-290 is dissolved in PAG, and THT is more hardly dissolved in PAG. Accordingly, it is considered that, as the difference between the HSP distance between PAG and THT and the HSP distance between PAG and R-290 is a larger value, the amount of THT dissolved in PAG is smaller, and a large amount of THT is contained in the refrigerant gas released from the refrigerant

circuit. The relationship between the difference between the HSP distance between PAG and THT and the HSP distance between PAG and R-290, and the odor intensity in evaluation test 3 is shown in Table 10.

[Table 10]

| Test No. | O/C Ratio | Difference in HSP distance | Odor intensity |
|---|---|---|---|
| 1 | 0.60 | -7.3 | 0 to 1 |
| 2 | 0.53 | -6.5 | 0 to 1 |
| 9 | 0.36 | -1.6 | 2 to 3 |
| 12 | 0.35 | -1.1 | 2 to 3 |
| 4 | 0.43 | -0.8 | 2 to 3 |
| 5 | 0.43 | -0.4 | 3 to 4 |
| 13 | 0.33 | -0.4 | 3 to 4 |
| 7 | 0.39 | -0.3 | 3 to 4 |
| 3 | 0.43 | -0.1 | 3 to 4 |
| 6 | 0.42 | 0.0 | 3 to 4 |
| 8 | 0.39 | 0.3 | 3 to 4 |
| 11 | 0.35 | 1.0 | 3 to 4 |
| 10 | 0.35 | 1.6 | 3 to 4 |

As a result of the above evaluation, the following was demonstrated: when the difference between the HSP distance between PAG and THT and the HSP distance between PAG and R-290 is -1.6 or more, the released refrigerant gas has an odor intensity of 2 or more; and when the difference is -0.4 or more, the released refrigerant gas has an odor intensity of 3 or more.

From the above results, to circulate THT with R-290 in the refrigerant circuit, PAG having a difference in the HSP distance of -1.6 or more is preferably used, and PAG having a difference in the HSP distance of -0.4 or more is more preferably used.

As a result of the present test, the solubility of THT in PAG was successfully demonstrated in detail with the use of HSP. However, HSP is needed to be calculated from the molecular structure of PAG. On the other hand, the O/C ratio can be easily analyzed by using a CHNSO element analyzer even in a state where the molecular structure is unknown.

<Evaluation test 5>

By using a commercially available air conditioner for households (indoor unit model number: MSZ-GV5620S/outdoor unit model number: MUCZ-G5620S manufactured by Mitsubishi Electric Corporation) having a refrigerant circuit, the refrigerant gas released from the refrigerant circuit was collected. In the refrigerant circuit, 450 g of R-290 was enclosed as the main component of the refrigerant, and 290 mg (643 ppm by weight based on the mass of the refrigerant) of THT was enclosed as the sulfur-based odorant. In the compressor, 400 g of PAG (Test No. 10 of evaluation test 3) used in evaluation test 1 was enclosed as the refrigeration oil.

The air conditioner for households was operated, and then, while stopping the air conditioner for households, the refrigerant gas was released from the point between the expansion valve and the evaporator and collected in a tedlar bag (1-2711-05 manufactured by AS ONE Corporation). The collected refrigerant gas was diluted to 1/1,000 with using high purity air (ZERO-A manufactured by Sumitomo Seika Chemicals Company, Limited.), and then, the sensory evaluation of the odor was carried out. The sensory evaluation was carried out by 5 examiners as in evaluation test 3.

As the result, the odor of the refrigerant gas was an odor intensity of 3 to 4. For ascertainment, the concentration of THT of the collected refrigerant gas was analyzed by using a gas chromatography mass spectrometer (JMS-K9 manufactured by JEOL Ltd.) as in evaluation test 1, and as the result, THT was contained in the refrigerant gas in a concentration of 80 ppm by weight (40 ppm by volume). That is, the THT concentration was 40 ppm by volume when the collected refrigerant gas was diluted to 1/1,000 with high purity air. Accordingly, it corresponds to the odor intensity of 4 in the odor intensity in evaluation test 2, and it was demonstrated to be not inconsistent with the results of the sensory evaluation.

From the above results, the following was demonstrated: when PAG having a low solubility of THT is used, the

dissolution of THT in PAG is suppressed, THT is allowed to circulate in the refrigerant circuit with R-290, and the refrigerant gas released from the refrigerant circuit is recognizable by the sense of smell.

The embodiments and examples disclosed herein should be considered to be exemplary in all respects and not restrictive. The scope of the present disclosure is indicated by the scope of claims rather than the above description, and is intended to include the meaning equivalent to the scope of claims and all modifications within the scope.

REFERENCE SIGNS LIST

1 Outdoor unit; 2 Indoor unit; 3 Compressor; 4 Condenser; 5 Outdoor blower; 6 Expansion valve; 7 Evaporator; 8 Indoor blower; 9 Liquid pipe; 10 Gas pipe; 11 Shell; 12 Compression mechanism; 13 Electric motor; 14 Inlet pipe; 15 Discharge pipe; 16 Accumulator; 17 Rolling piston; 18 Cylinder; 19 Cylinder chamber; 20 Upper bearing; 21 Discharge hole of upper bearing; 22 Muffler space; 23 Discharge muffler; 24 Discharge hole of discharge muffler; 25 Electric motor rotor; 26 Electric motor stator; 27 Oil reservoir part; 28 Driving shaft; 100 Refrigerant circuit.

## Claims

**1.** A refrigeration cycle device comprising: a refrigerant circuit comprising a compressor, wherein

a refrigerant is enclosed in the refrigerant circuit,
the refrigerant contains a hydrocarbon having 1 to 4 carbon atoms and a sulfur-based odorant,
the compressor is filled with a refrigeration oil,
the refrigeration oil contains polyalkylene glycol, and
a ratio of a number of oxygen atoms to a number of carbon atoms in a molecular structure of polyalkylene glycol is 0.50 or less.

**2.** The refrigeration cycle device according to claim 1, wherein a difference between an HSP distance between polyalkylene glycol and the sulfur-based odorant and an HSP distance between polyalkylene glycol and the refrigerant is -2.0 or more.

**3.** The refrigeration cycle device according to claim 2, wherein the difference between the HSP distance between polyalkylene glycol and the sulfur-based odorant and the HSP distance between polyalkylene glycol and the refrigerant is -0.5 or more.

**4.** The refrigeration cycle device according to any one of claims 1 to 3, wherein the sulfur-based odorant is at least one selected from the group consisting of mercaptans, sulfides, and thiophenes.

**5.** The refrigeration cycle device according to any one of claims 1 to 4, wherein the refrigerant is at least one selected from the group consisting of propane, propylene, and isobutane.

**6.** The refrigeration cycle device according to any one of claims 1 to 5, wherein

the sulfur-based odorant is tetrahydrothiophene, and
the refrigerant is propane.

**7.** The refrigeration cycle device according to any one of claims 1 to 6, wherein a concentration of the sulfur-based odorant in the refrigerant is 50 ppm by weight or more and less than 1,100 ppm by weight.

FIG.1

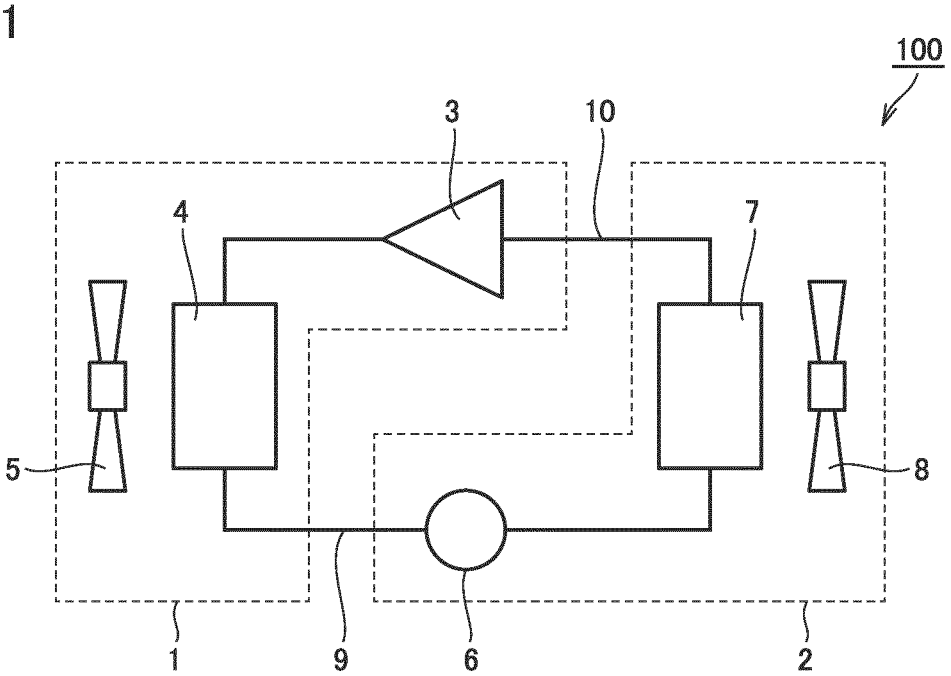

FIG.2

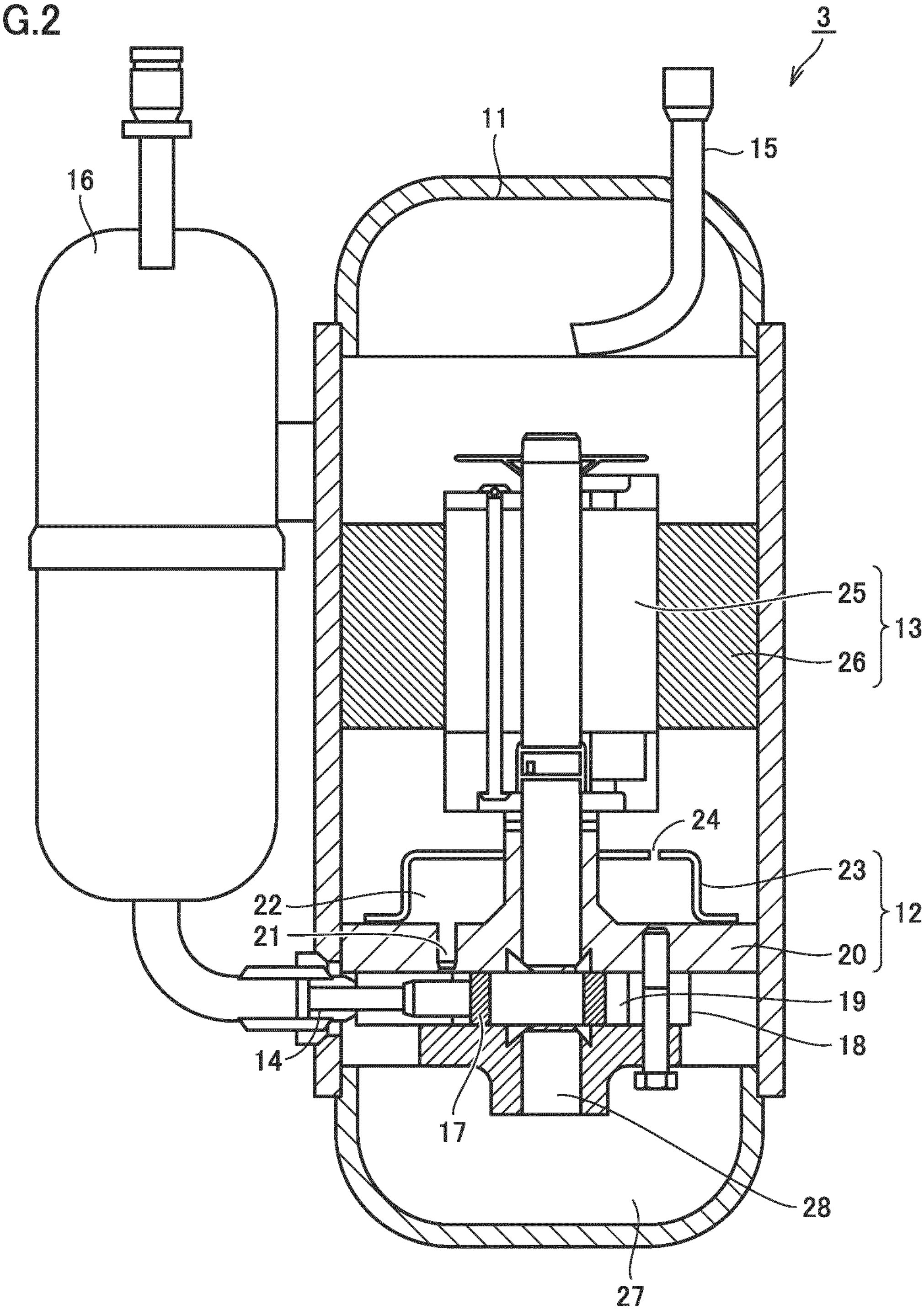

FIG.3

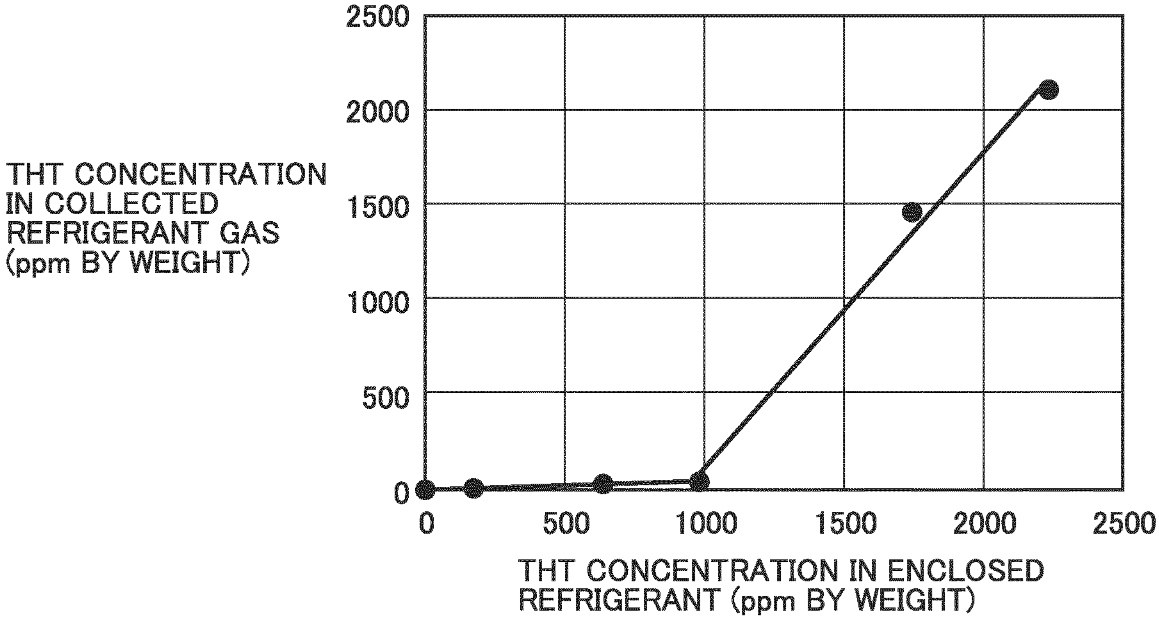
2500
2000
1500
1000
500
0
THT CONCENTRATION
IN COLLECTED
REFRIGERANT GAS
(ppm BY WEIGHT)
0
500
1000
1500
2000
2500
THT CONCENTRATION IN ENCLOSED
REFRIGERANT (ppm BY WEIGHT)

FIG.4

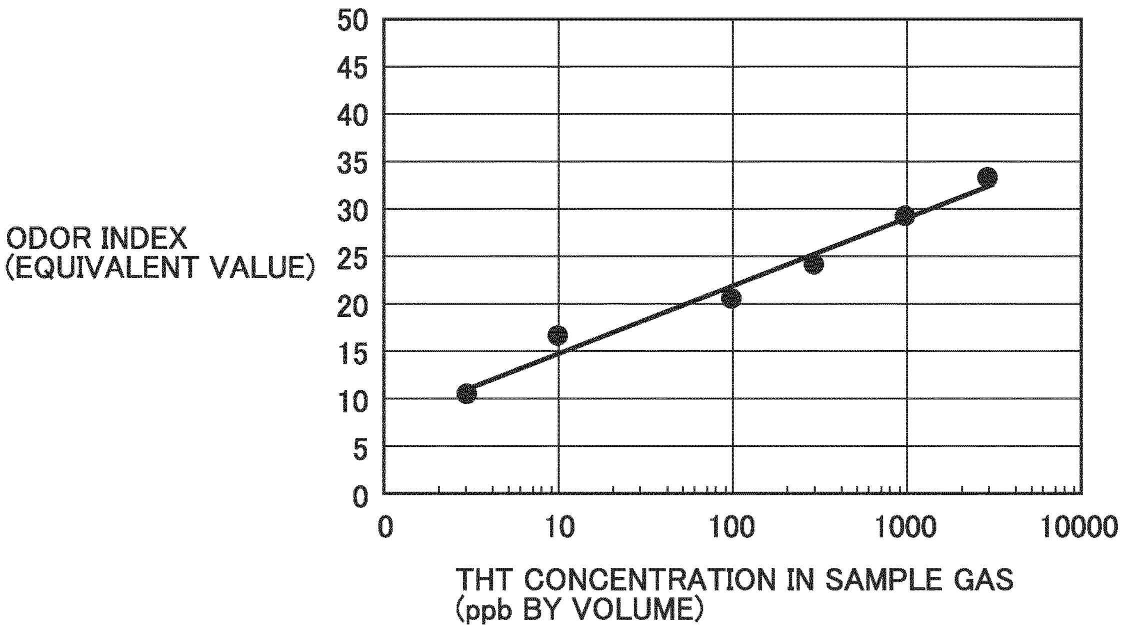
50
45
40
35
30
25
20
15
10
5
0
ODOR INDEX
(EQUIVALENT VALUE)
0
10
100
1000
10000
THT CONCENTRATION IN SAMPLE GAS
(ppb BY VOLUME)

**INTERNATIONAL SEARCH REPORT**

International application No.
**PCT/JP2021/040982**

**A. CLASSIFICATION OF SUBJECT MATTER**

***F25B 1/00***(2006.01)i
FI: F25B1/00 396G; F25B1/00 396J

According to International Patent Classification (IPC) or to both national classification and IPC

**B. FIELDS SEARCHED**

Minimum documentation searched (classification system followed by classification symbols)

F25B1/00-49/04; F24F1/00-13/32; C09K5/04; C10N40/30

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2021/166028 A1 (MITSUBISHI ELECTRIC CORP) 26 August 2021 (2021-08-26) paragraphs [0018]-[0019], [0035]-[0036], [0040]-[0052], [0082]-[0086], fig. 1-2 | 1, 4-6 |
| Y | | 7 |
| A | | 2-3 |
| Y | JP 2002-38135 A (SANYO ELECTRIC CO LTD) 06 February 2002 (2002-02-06) paragraph [0010] | 7 |
| A | JP 2020-112285 A (MITSUBISHI ELECTRIC CORP) 27 July 2020 (2020-07-27) entire text, all drawings | 1-7 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 November 2021** | **07 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/040982**

| Patent document cited in search report | Publication date (day/month/year) | Patent family member(s) | Publication date (day/month/year) |
|---|---|---|---|
| WO 2021/166028 A1 | 26 August 2021 | (Family: none) | |
| JP 2002-38135 A | 06 February 2002 | US 2002/0035848 A1<br>paragraph [0029]<br>EP 1176182 A1<br>KR 10-2002-0010086 A<br>CN 1336409 A | |
| JP 2020-112285 A | 27 July 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020112285 A
- JP 2002038135 A


### Non-patent literature cited in the description


- **VAN KREVELEN.** *Properties of Polymers,* 2009
- *Journal of Japan Society of Air Pollution,* 1992, vol. 27 (2), A17-A24
- *J. Am. Chem. Soc.,* 1939, vol. 61, 1769-1780
- *J. Chem. Phys.,* 1960, vol. 33 (5), 1514-1518
- *J. Chem. Phys.,* 1933, vol. 1, 337-340